# EUROPÄISCHE PATENTSCHRIFT

(11) **EP 3 058 632 B1**
(45) Veröffentlichungstag und Bekanntmachung des Hinweises auf die Patenterteilung: **02.03.2022**
(21) Anmeldenummer: 15704246.6
(22) Anmeldetag: 03.02.2015
(51) Int. Cl.: G02B 6/44, H01B 7/14, H01B 13/26, H02G 9/06, H02G 1/10

(54) **VERFAHREN UND VORRICHTUNG ZUR HERSTELLUNG EINES SEEKABELS SOWIE DAMIT HERGESTELLTES SEEKABEL**
METHOD AND APPARATUS FOR PRODUCING A SUBMARINE CABLE, AND SUBMARINE CABLE PRODUCED THEREWITH
PROCÉDÉ ET DISPOSITIF DE PRODUCTION D'UN CÂBLE SOUS-MARIN ET CÂBLE SOUS-MARIN PRODUIT AU MOYEN DUDIT PROCÉDÉ

(30) Priorität: 24.02.2014 DE 102014203223
(43) Veröffentlichungstag der Anmeldung: 24.08.2016
(73) Patentinhaber: Siemens Gamesa Renewable Energy A/S, 7330 Brande (DK)
(72) Erfinder: SOERENSEN, Johnny, DK-6920 Videbæk (DK)
(74) Vertreter: Aspacher, Karl-Georg
(86) Internationale Anmeldenummer: PCT/EP2015/052168
(87) Internationale Veröffentlichungsnummer: WO 2015/124418

(56) Entgegenhaltungen:
- EP-A2- 1 049 109
- DE-A1- 2 456 676
- DE-A1- 19 927 958
- DE-A1-102006 062 545
- US-A- 4 232 935
- US-A- 4 437 789
- US-A- 4 741 470
- US-A- 5 054 881
- Karin Meissner ET AL: "Impacts of submarine cables on the marine environment - A literature review -", , 30 September 2006 (2006-09-30), XP055770129, Retrieved from the Internet: URL:http://www.naturathlon.eu/fileadmin/Bf N/meeresundkuestenschutz/Dokumente/BfN_Lit eraturstudie_Effekte_marine_Kabel_2007-02_ 01.pdf [retrieved on 2021-01-29]

## Beschreibung

Die Erfindung betrifft ein Verfahren und eine Vorrichtung zur Herstellung eines Seekabels (auch Offshore-Kabel genannt) sowie ein damit hergestelltes Seekabel, insbesondere zur Energie- und/oder Datenübertragung zwischen einer Windenergieanlage eines Offshore-Windparks auf See und/oder weiterer Windenergieanlagen des gleichen Offshore-Windparks und/oder anderer Offshore-Windparks auf See oder Onshore-Windparks auf dem Festland, ggfs. über elektrische Umspannwerke.

Seekabel werden beim Stand der Technik innerhalb von Offshore-Windparks zwischen einzelnen Windenergieanlagen als Infield-Seekabel geringeren Durchmessers oder von Offshore-Windparks zum Festland als Export-Seekabel größeren Durchmessers mittels sogenannter "Kabelleger-Schiffe" auf und/oder im Meeresboden verlegt.

Ein derartiges im radialen Querschnitt zylindrische Seekabel für Drehstrom oder Hochspannungs-Gleichstrom-Übertragung (HGÜ) besteht beim Stand der Technik aus einer Mehrzahl von Energieleitern insbesondere aus Kupfer und/oder einer Mehrzahl von Datenleitern insbesondere aus Kupfer oder Glas- oder Kunststofffasern, welche innerhalb einer rohrförmigen Kabel-Schutzhülle (Ummantelung) insbesondere aus flexiblem Kunststoff oder Metall aufgenommen und dort wasserdicht und vor mechanischer und chemischer Beschädigung geschützt eingebettet sind.

Die Schichten der rohrförmigen Kabel-Schutzhülle können von radial außen nach radial innen wie folgt ausgebildet sein:
Polyethylen-Rohr (PET), biaxial-orientierte Polyesterfolie (boPET), verdrillte Stahlseile als rohrförmige Armierung, Aluminium-Rohr als Wasserbarriere, Polycarbonat-Rohr, Kupfer- oder Aluminium-Rohr, Vaseline.

Ein alternativer Aufbau der Schichten der rohrförmigen Kabel-Schutzhülle kann wie folgt ausgebildet sein: Polypropylen-Verseilung (PP) Bitumen-Schicht, Armierung, Bitumen-Schicht, Einbettschicht.

Weitere Aufbauten der Schichten der rohrförmigen Kabel-Schutzhülle können natürlich auch möglich sein, die allesamt von der vorliegenden Erfindung umfasst sein sollen.

Die Energie- und Datenleiter des Seekabels liegen beispielsweise durch einen Eingieß- und/oder Eintauchvorgang geschützt eingebettet innerhalb der Vaseline-Schicht bzw. Einbettschicht.

Nachteil ist, dass herkömmliche Offshore-Seekabel wegen ihrer im Vergleich zu Onshore-Kabeln sehr aufwändigen Armierung ein höheres Gewicht, größeren Außendurchmesser, größere Wandstärken und einen größeren min. Biegeradius aufweisen. Damit sind die Offshore-Seekabel kostenintensiver wegen der schwierigeren Handhabung, d.h. Herstellung, Lagerung, Transport und Verlegung auf/im Meeresboden.

Weiterer wesentlicher Nachteil ist, dass bei den Offshore-Kabeln im Vergleich zu Onshore-Kabeln lange Lieferfristen in Kauf genommen werden müssen, da es nur wenige (derzeit drei) hierauf spezialisierte Hersteller gibt.

Weitere Nachteile sind die relativ großen Übertragungsverluste auf Grund der Induktion zwischen den Energie- und Datenleitern und der Armierung, was wiederum eine größere Querschnittsfläche der Leiter erfordert, insbesondere bei Drehstromübertragung.

Damit ist auch ein Anschließen der Offshore-Kabel innerhalb der Übergangsstücke zu anderen Offshore- oder Onshore-Kabeln oder Umspannwerken mit höheren Kosten verbunden.

In US 5,054,881 wird ein Unterwasserkabel mit einem Glasfaserstrang und einem Schutzrohr um den Glasfaserstrang beschrieben.

In DE 10 2006 062 545 A1 wird ein Schutzschlauch für Leitungen beschrieben. Der Schutzschlauch wird mit Hilfe eines Hilfswerkzeugs aufgeschlitzt, um Schläuche oder Kabel darin zu verlegen.

In DE 24 56 676 A1 wird ein elektrisches Tiefseekabel beschrieben, bei dem in dem Zwischenraum zwischen Kabelseele und Schutzrohr des elektrischen Tiefseekabels mit Material gefüllt ist, dessen spezifisches Gewicht kleiner als "1" ist.

In US 4,437,789 werden ein Verfahren und eine Anordnung zum Verlegen eines vor Nagetieren geschützten Erdkabels beschrieben.

In DE 199 27 958 wird ein Verfahren zur Herstellung einer schützenden Ummantelung elektrischer Leitungen beschrieben. Die Ummantelung wird als formstabiles Wellrohr mit einer längs einer Mantellinie verlaufenden schlitzförmigen Öffnung ausgebildet.

In EP 1 049 109 A2 wird eine Kabelhülle beschrieben, deren Umfang durch Wärme reduziert wird, um ein Kabel zu umfassen.

In US 4,232,935 wird ein Kommunikationskabel mit einer Schutzhülle aus Metall beschrieben. Die Schutzhülle wird mit Hilfe eines Schweißverfahrens geschlossen und anschließend mechanisch in eine gewellte Form gebracht.

In US 4,741,470 wird ein Kommunikationskabel mit einem Schutzrohr aus einer Kupferlegierung und einem in Längsrichtung des Schutzrohrs verlaufenden Schlitz beschrieben.

In Karin Meissner et al: "Impacts of submarine cables on the marine environment - A literature review -", 30. September 2006 (2006-09-30), XP055770129 werden Seekabel mit Isolationsschichten aus unterschiedlichen Materialkombinationen beschrieben.

Aufgabe der vorliegenden Erfindung ist es daher, ein Verfahren und eine Vorrichtung zur Herstellung eines gattungsgemäßen Seekabels derart weiter zu bilden, dass dieses einfacher und kostengünstiger in der Herstellung und ggfs. in der Verlegung in die See ist.

Die gestellte Aufgabe wird durch das Verfahren zur Herstellung eines Seekabels gemäß des Patentanspruches 1, sowie durch die Vorrichtung zur Herstellung eines Seekabels gemäß des Patentanspruches 4, sowie durch das Seekabel gemäß des Patentanspruches 7 gelöst.

Ein gattungsgemäßes Seekabel beinhaltet eine Anzahl insbesondere elektrische und/oder optische Leiter, umfassend Energieleiter, insbesondere aus Kupfer, und/oder Datenleiter, insbesondere aus Kupfer oder Glas- oder Kunststofffasern, welche innerhalb eines insbesondere mindestens abschnittsweise flexiblen Kabel-Schutzrohres aus Kunststoff, aufgenommen und dort abgedichtet/wasserdicht vor mechanischer, physikalischer und chemischer Beschädigung geschützt eingebettet sind.

Das erfindungsgemäße Verfahren zur Herstellung eines derartigen Seekabels beinhaltet folgende Schritte:
1a) Bereitstellen der Leiter sowie des Kabel-Schutzrohrs und Fördern in einen gemeinsamen Montagebereich.
1b) Zusammenführen, bei insbesondere kontinuierlicher Förderung der Leiter und des Kabel-Schutzrohres in gleicher Förderrichtung, in einen gemeinsamen Zusammenführbereich.
   Optionales insbesondere kontinuierliches Auftrennen des Mantels des Kabel-Schutzrohres in Längsrichtung in einem Öffnungsbereich, so dass sich ein Trennschlitz im Kabel-Schutzrohr bildet, der sich durch die gesamte Wandstärke des Mantels sowie über mindestens einen Teil der Länge des Kabel-Schutzrohres erstreckt. Alternativ kann ein in Längsrichtung verlaufender Trennschlitz im Mantel des Kabel-Schutzrohres bereits vorhanden sein, bevor das Kabel-Schutzrohr in den Montagebereich gefördert wird. Dabei kann dieser Trennschlitz vor dem Schritt 1a) außerhalb des Montagebereiches in den Mantel des Kabel-Schutzrohres durch den Hersteller des Kabel-Schutzrohres oder des fertig konfektionierten Seekabels eingebracht werden oder bereits bei der Herstellung integriert werden.
1c) Öffnen, insbesondere Aufbiegen des in Längsrichtung des Kabel-Schutzrohres verlaufenden Trennschlitzes insbesondere radial, umfänglich, in Querschnittsrichtung, quer oder schräg im Winkel zur Längserstreckung des geöffneten Trennschlitzes im Öffnungsbereich, mindestens soweit, so dass sich eine Einführöffnung des geöffneten Trennschlitzes für die Leiter bildet.
1d) Offenhalten des geöffneten Trennschlitzes in einem Offenhaltebereich.
1e) Insbesondere kontinuierliches gemeinsames, teilweise gemeinsames oder zeitliches hintereinander Einführen der Leiter in das Kabel-Schutzrohr durch die Einführöffnung des geöffneten Trennschlitzes in einem Einführbereich.
1f) Lösen des Offenhaltens des geöffneten Trennschlitzes in einem Schließbereich, so dass sich stromabwärts zwei Längskanten des Trennschlitzes überlappen und so sich in einem Überlappungsbereich zwei überlappende streifenförmige Mantelwinkelbereiche bilden und dort mindestens die doppelte Mantelwandstärke des Kabel-Schutzrohres bilden.

Schließen des geöffneten Trennschlitzes insbesondere durch Überlappen bzw. Übereinanderschlagen in einem Überlappungsbereich von Mantelwinkelstreifen des Kabel-Schutzrohres auf beiden Seiten des Trennschlitzes im Schließbereich, insbesondere mittels seitlicher schräger Führungsrollen. Alternativ kann auch ein Schließen des geöffneten Trennschlitzes derart erfolgen, dass beide Längskanten des Trennschlitzes Stoß-an-Stoß liegen und ggfs. miteinander fluchten und ggfs. sich berühren. Alternativ kann auch ein Schließen des geöffneten Trennschlitzes derart erfolgen, dass ein flexibles Verschlussband zwischen den zwei Längskanten des Trennschlitzes insbesondere klemmend dort aufgenommen wird. Auch beliebige Kombinationen der oben erwähnten Varianten sind sequenziell hintereinander möglich. Zeitlich vor oder während Schritt 1e oder zeitlich während oder nach Schritt 1f oder zeitlich zwischen Schritt 1e und Schritt 1f wird eine abdichtende/wasserdichte Einbettschicht/Vergussmasse in den Zwischenraum zwischen das Kabel-Schutzrohr und die darin befindlichen Leiter eingefüllt.

Die erfindungsgemäße Vorrichtung zur Herstellung eines Seekabels beinhaltet gemäß Patentanspruch 4 entsprechende Einrichtungen zur Ausübung der zuvor genannten Verfahrenschritte. Das erfindungsgemäße Seekabel gemäß Patentanspruch 7 entspricht einem gattungsgemäßen Seekabel und unterscheidet sich dadurch, dass sich zwei in einem Überlappungsbereich befindliche bevorzugt in Längsrichtung verlaufende Mantelwinkelstreifen des Kabel-Schutzrohres aus Kunststoff überlappen oder die zwei Längskanten des Trennschlitzes aneinanderstoßen, oder die zwei Längskanten des Trennschlitzes zwischen sich ein Verschlussband insbesondere klemmend aufnehmen. Die jeweiligen Verbindungsbereiche der zuvor beschriebenen drei Varianten sind insbesondere abgedichtet/wasserdicht vor mechanischer, physikalischer und chemischer Beschädigung geschützt und/oder insbesondere unlösbar miteinander verbunden.

Alternativ kann daher das Kabel-Schutzrohr mit einem z.B. H-förmigen Verschlussband verschlossen werden, wobei Mantelwinkelstreifen des Kabel-Schutzrohrs in Nuten des H-förmigen Verschlussbandes eingreifen und den Trennschlitz verschließen. Das H-förmige Verschlussband kann hierbei aus Segmenten bestehen oder als Laufware genutzt und kontinuierlich eingefügt werden. Eine Einbringung von einem Klebstoff, Adhäsiv oder anderem Fügematerial wie beispielsweise Silikon ist hierbei auch denkbar. In einer weiteren alternativen Anordnung kann das Kabelschutzrohr durch einen Schweißvorgang geschlossen und versiegelt werden.

Das erfindungsgemäße Seekabel umfasst auch eine abdichtende/wasserdichte Einbettschicht/Vergussmasse in dem Zwischenraum zwischen dem Kabel-Schutzrohr und den darin befindlichen Leitern.

Die Leiter des erfindungsgemäßen Seekabels sind insbesondere durch eine Aluminium-Ummantelung zwischen einer äußeren Gummiummantelung und dem Leiter vor Wasser geschützt. Ferner erlaubt ein Eindringen von Wasser in das Kabelschutzrohr eine besonders gute Kühlung der Leiterkabel, was weniger Widerstandsverlust, sowie mehr Leistung auf dem Leiterkabel ermöglicht.

Dieses erfindungsgemäße Offshore-Kabel und dessen Herstellverfahren sind deshalb vorteilhaft, da diese sehr kostengünstig sind. Damit können Standard-Komponenten direkt auf einem Installations-Schiff (Kabelleger-Schiff) zu dem erfindungsgemäßen Offshore-Kabel zusammengeführt werden, wohingegen der Stand der Technik eine mühsame Installation in einer Fabrik verlangt, mit Problemen bei Lagerung, Transport und Bereitstellung zum Verlegen auf dem Schiff. Weiterhin gibt es viele Hersteller der Standard-Komponenten der Erfindung, wohingegen es nur wenig Zulieferer von Offshore-Kabeln des Standes der Technik gibt, die zudem teuer sind. Weitere Vorteile der erfindungsgemäßen Offshore-Kabel sind, dass kleinere Kabelverleger-Schiffe oder gar einfache Schiffe mit genügend Raum auf dem Schiffsdeck eingesetzt werden können, so dass die Verlegung der Offshore-Kabel noch einmal kostengünstiger wird. Eine sofortige (just in time) Lieferung aller Kabel ist möglich, da die Einzelkabel und die Kabelschutzrohre (insbesondere aus HDPE-Kunststoff = High Density Polyethylen) Standard-Komponenten im Handel sind. Weitere, besonders vorteilhafte Ausgestaltungen und Weiterbildungen der Erfindung ergeben sich aus den abhängigen Ansprüchen sowie der nachfolgenden Beschreibung. Die abhängigen Ansprüche sowie die nachfolgende Beschreibung enthalten besonders vorteilhafte Weiterbildungen und Ausgestaltungen der Erfindung, wobei insbesondere auch die Ansprüche einer Kategorie analog zu den abhängigen Ansprüchen einer anderen Anspruchskategorie weitergebildet sein können. Ebenso können Merkmale verschiedener Ausführungsvarianten kombiniert werden.

Das optionale Auftrennen des Kabel-Schutzrohres erfolgt durch mechanisches und/oder physikalisches und/oder chemisches Trennen. Insbesondere erfolgt das Auftrennen durch spanloses Trennen insbesondere mittels Messer, Klinge, Schere, die ggfs. elektrisch beheizbar sind. Alternativ kann das Auftrennen durch spanabtragendes Trennen insbesondere mittels Stanzen oder Fräser und/oder durch Flüssigkeits- oder Partikelstrahlen insbesondere mittels Wasserstrahl oder Sandstrahl erfolgen. Am einfachsten und kostengünstigen ist aber ein Auftrennen mittels Messer oder Klinge, welche auf einer Vorrichtung fest stehen und sich das Kabel-Schutzrohr relativ dazu in Förderrichtung bewegt. Die Fördergeschwindigkeit wird dabei auf das Material (z.B. HDPE-Kunststoff) des Kabel-Schutzrohrs abgestimmt.

Insbesondere erfolgt das Aufbiegen des Trennschlitzes mittels Kraftwirkung mindestens eines Keiles, der auch für das Offenhaltendes geöffneten Trennschlitzes in Schritt 1e) sorgen kann, zusätzlich oder alternativ zu mindestens einer Führungsrolle. Die Keile und Führungsrollen greifen dabei über die Einführöffnung in den Innenraum des geöffneten Kabel-Schutzrohrs ein und lassen die Kanten des geöffneten Mantels des geöffneten Kabel-Schutzrohrs während der Förderung des Kabel-Schutzrohrs auf sich aufgleiten.

Das Einführen aller elektrischer und/oder optischer Leiter in das Kabel-Schutzrohr in Schritt 1e) erfolgt bevorzugt gemeinsam, wobei alle Leiter sowie das Kabel-Schutzrohr etwa gleiche Fördergeschwindigkeit aufweisen. Damit ist eine sehr schnelle Einbringung der Leiter in das Kabel-Schutzrohr möglich. In einer anderen Ausführungsform können die Leiter aber auch zeitversetzt zueinander in das Kabel-Schutzrohr eingebracht werden, falls z.B. die Einführöffnung nicht groß genug gewählt werden kann, z.B. wegen einer zu geringen Elastizität des Materials des Kabel-Schutzrohrs. Optional wird nach dem Einbringen der Leiter in das Kabel-Schutzrohr, ein im Querschnitt I-, L-, Z-, T-, oder H-förmiges flexibles Verschlussband zumindest in den Trennschlitz des Kabel-Schutzrohrs eingeführt.

Das Schließen des geöffneten Trennschlitzes erfolgt zunächst durch die Eigenelastizität des Kabel-Schutzrohrs, wenn die Kraftwirkung der Einrichtung zum Offenhalten (Keil und/oder innere Führungsrollen) entfällt, auf Grund der fortschreitenden Förderung des Kabel-Schutzrohrs. Diese Eigenelastizität des Kabel-Schutzrohrs bewirkt jedoch in der Regel kein vollkommenes Schließen oder lediglich ein Stoß-an-Stoß-Schließen des Trennschlitzes des Kabel-Schutzrohrs, ggfs. mit dazwischen eingeklemmtem elastischem Verschlussband. Um einen noch weiter verbesserten Schutz der darin aufgenommenen Leiter zu erreichen, kann vorzugsweise ein aktives Übereinanderschlagen der beiden Längskanten des Trennschlitzes des Kabel-Schutzrohres übereinander erfolgen, insbesondere mittels seitlicher schräger Führungsrollen. Durch diese seitlichen schrägen Führungsrollen werden ohnehin notwendige seitliche Führungsrollen an dieser Stelle ersetzt, so dass die Vorrichtung kostengünstiger wird. Dieses Übereinanderschlagen der beiden Längskanten des Trennschlitzes des Kabel-Schutzrohres kann auch durch andere Einrichtungen erfolgen, so z.B. durch Krafteinwirkung von Stößeln oder Exzenternocken auf einer oder auf beiden Seiten des Kabel-Schutzrohres, wobei dann aber Gegenlager nötig sind, z.B. seitliche Führungsrollen mit vertikaler Drehachse. Diese seitlichen Gegenlager für die Stößel oder Exzenternocken können aber auch entfallen, falls diese von oben her auf die beiden Längskanten des Trennschlitzes des Kabel-Schutzrohres wirken.

Zeitlich vor oder während Schritt 1e) oder zeitlich während oder nach Schritt 1f) oder zeitlich zwischen Schritt 1e) und Schritt 1f) wird eine herkömmliche abdichtende/wasserdichte Einbettschicht/Vergussmasse, insbesondere Bitumen und/oder Kunststoff, in den Zwischenraum zwischen das Kabel-Schutzrohr und die darin befindlichen Leitern eingefüllt.

Diese abdichtende Einbettschicht/Vergussmasse kann auch im Überlappungsbereich in den Zwischenraum zwischen den beiden sich überlappenden Mantelwinkelstreifen des Kabel-Schutzrohres eingefüllt werden, welche somit abdichtend/wasserdicht unlösbar miteinander verbunden werden. Alternativ können die beiden Mantelwinkelstreifen auch mittels anderer Verbindungsarten miteinander abdichtend verbunden werden, wie z.B. durch Verkleben, Vulkanisieren, Thermisches Verbinden, Verschweißen, Verlöten etc..

In einer alternativen Ausführungsform der vorliegenden Erfindung sind die beiden Längskanten des Trennschlitzes des Kabel-Schutzrohres, in einer stirnseitig zueinander fluchtenden, sich berührenden oder berührungslosen, Stoß-an-Stoß-Lage der beiden einander benachbarten Längskanten, durch eine Verschweißung und/oder Verklebung, insbesondere in Längsrichtung, miteinander verbunden und durch diese Verschweißung und/oder Verklebung vorzugsweise auch gegen Wasserdruck in der Verlegetiefe der See abgedichtet. Bevorzugt wird daher, dass eine durchgehende Verklebung oder Verschweißung des Kabel-Schutzrohres in Längsrichtung erfolgt.

In einer alternativen Ausführungsform der vorliegenden Erfindung sind die beiden Längskanten des Trennschlitzes des Kabel-Schutzrohres, in einer stirnseitig zueinander fluchtenden berührungslosen Stoß-an-Stoß-Lage der beiden einander benachbarten Längskanten, über ein in den Trennschlitz eingeführtes, im Querschnitt insbesondere I-, L-, Z-, T-, oder H-förmiges, insbesondere flexibles, Verschlussband miteinander verbunden und durch dieses Verschlussband vorzugsweise auch gegen Wasserdruck in der Verlegetiefe der See abgedichtet. Hierzu wird das in den Trennschlitz eingeführte Verschlussband mit dem Kabel-Schutzrohr bevorzugt verklebt und/oder verschweißt. Das Verkleben muss nicht zwingend über den gesamten Querschnitt des Verschlussbandes verlaufen, sondern kann auch nur Abschnittsweise erfolgen. Bevorzugt wird aber, dass eine durchgehende Verklebung oder Verschweißung des Verschlussbandes in Längsrichtung des Verschlussbandes bzw. des Kabel-Schutzrohres erfolgt. Das Verschlussband ist hierbei flexibel ausgebildet und insbesondere aus einem Kunststoffmaterial, bevorzugt aus dem gleichen Kunststoff, wie das Kabel-Schutzrohr, z.B. aus HDPE-Kunststoff.

Die erfindungsgemäße Vorrichtung beinhaltet als Bereitstelleinrichtung zum Bereitstellen der Leiter und des Kabel-Schutzrohres vorzugsweise herkömmliche Aufwickelhaspeln bzw. Kabeltrommeln mit liegender oder stehender Achse. Hierbei können auch sehr lange Seekabel einfach und kostengünstig hergestellt werden, indem die Leiter und KabelSchutzrohre jeweils auf einer zugeordneten Aufwickelhaspel bzw. Kabeltrommel aufgewickelt sind und auf das Kabellegerschiff transportiert werden, um dann während des Verlegevorganges abgewickelt, konfektioniert und in der See verlegt zu werden. Somit ist es möglich, dass seriell hintereinander folgend mehrere kürzere Leiter in ein gemeinsames Kabel-Schutzrohr verlegt und über elektrisch und/oder optisch leitende und ggfs. abdichtende Leiter-Verbindungen miteinander verbunden werden. Die Leiter sind hierbei insbesondere an ihren Endstücken mit Aluminium verschweißt und bilden somit eine durchgängige leitende Verbindung. Die Schweißpunkte sind mit Kunststoff versiegelt. Ferner sind die Schweißverbindungen in Längsrichtung versetzt angeordnet um eine zu große Verdickung an einer Stelle zu vermeiden. Eine Leiter-Verbindung hat dabei einen z.B. doppelt so großen Außendurchmesser als ein Leiter selbst. Deswegen ist es vorteilhaft, dass die Leiter-Verbindungen parallel verlegter Leiter zueinander in Längsrichtung versetzt im Kabel-Schutzrohr zu liegen kommen, da hiermit das Kabel-Schutzrohr relativ klein im Durchmesser gewählt werden kann, weil sich die Mehrzahl von Leiter-Verbindungen paralleler Leiter auf diese Art und Weise gegenseitig nicht behindern können, wenn das Kabel-Schutzrohr sich schließt bzw. geschlossen wird. Dadurch können viele kleinere Längen von Leitern bzw. von Kabel-Schutzrohren zu einem sehr langen (hunderte oder tausende von Kilometern) Seekabel zusammen gefügt und in die See verlegt werden. Damit können auch die Aufwickelhaspeln bzw. Kabeltrommeln relativ klein dimensioniert werden und stattdessen eine größere Anzahl gewählt werden, um die zu verlegende Strecke mit einem Seekabel zu überbrücken. Dies führt zu geringeren Transportkosten, da herkömmliche Transportfahrzeuge eingesetzt werden können und keine Spezialfahrzeuge nötig sind.

Als Förder- und Zusammenführeinrichtung zum Fördern und Zusammenführen der Leiter und des Kabel-Schutzrohres sowie des fertig konfektionierten Seekabels, können auf einem leiter- oder kettenförmigen Grundrahmen aktiv antreibbare Antriebe insbesondere in Form von Förderbändern und passiv antreibbare/mitlaufende seitliche und obere Führungsrollen insbesondere in Form von stehenden oder liegenden Zylindern vorhanden sein. Die stehenden Zylinder der Führungsrollen können in ihrem mittleren Mantelbereich konkave Ausnehmungen, in welche dann das Kabel-Schutzrohr eingreifen und somit seitlich geführt und/oder angetrieben werden kann. Die seitlichen Führungsrollen sind hierbei insbesondere paarweise auf dem Grundrahmen angebracht, damit das Kabel-Schutzrohr links und rechts der Förderrichtung gleichmäßig geführt werden kann. Hingegen haben die oberen Führungsrollen als Gegenlager die aktiv antreibbaren Förderbänder.

Natürlich kann auch jede der seitlichen und/oder oberen Führungsrollen ebenfalls aktiv antreibar sein. Auch können die aktiv antreibbaren Förderbänder entfallen und stattdessen untere Führungsrollen vorhanden sein, ähnlich der oberen Führungsrollen, wobei der aktive Antrieb dann z.B. außerhalb des Rahmens der Vorrichtung angeordnet wäre. Auch können sämtliche passiven mitgetriebenen Führungsrollen auch ortsfest ausgeführt sein und lediglich einen geringen Reibkoeffizienten mindestens auf der dem Kabel-Schutzrohr zugewandten Oberfläche aufweisen, so dass das Kabel-Schutzrohr entlang diesen glatten Oberflächen der z.B. auf dem Grundrahmen feststehenden Führungsrollen geführt gleiten können.

Die optionale Auftrenneinrichtung zum Auftrennen des Mantels des Kabel-Schutzrohres beinhalten eine Anzahl insbesondere am Grundrahmen fest stehender Messer, Klingen, oder beweglicher Scheren, Stanzen, Fräser, Wasserstrahl- oder Sandstrahleinrichtungen. Feststehende Messer und Klingen sind aber zum Auftrennen eines Kabel-Schutzrohres aus Kunststoff besonders gut geeignet und zudem sehr preisgünstig.

Die Öffnungseinrichtung zum Öffnen, insbesondere Aufbiegen, des Trennschlitzes beinhalten mindestens einen insbesondere fest stehenden Keil, der ggfs. die Einrichtung zum Auftrennen des Mantels des Kabel-Schutzrohres trägt. Alternativ zum Keil kann auch ein Stift, eine Nocke, oder eine feststehende oder passiv drehbare oder aktiv sich drehende Rolle oder Walze eingesetzt werden, ähnlich den seitlichen oder oberen Führungsrollen.

Die Offenhalteeinrichtung zum Offenhalten des geöffneten Trennschlitzes beinhalten bevorzugt eine Anzahl insbesondere fest stehender Keile und/oder eine Anzahl insbesondere ortsfester aktiv und/oder passiv antreibbare Führungsrollen, ähnlich den seitlichen oder oberen Führungsrollen. Statt der Keile können auch Führungsrollen, ähnlich den seitlichen oder oberen Führungsrollen verwendet werden.

Die Schließeinrichtung zum Schließen des geöffneten Trennschlitzes kann eine Anzahl insbesondere ortsfester aktiv und/oder passiv antreibbare schräge Führungsrollen beinhalten, die auch durch Stifte oder Nocken etc. ersetzt werden können.

Das erfindungsgemäße Seekabel kennzeichnet sich in einer bevorzugten Variante dadurch aus, dass entweder die zwei sich überlappenden in Längsrichtung verlaufenden Mantelwinkelstreifen des Kabel-Schutzrohres aufeinander aufliegen und/oder der radiale Zwischenraum zwischen den zwei sich überlappenden in Längsrichtung verlaufenden Mantelwinkelstreifen des Kabel-Schutzrohres mit der abdichtenden/wasserdichten Vergussmasse gefüllt ist.

Bevorzugt hat das Seekabel folgende Maße: Der Durchmesser des Kabel-Schutzrohres beträgt nach dem Schritt 1f) zwischen 50% und 99% insbesondere zwischen 60% und 90% ganz besonders zwischen 70% und 80% des ursprünglichen Durchmessers des Kabel-Schutzrohres vor/im Schritt 1a). Gleichzeitig oder alternativ beträgt der überlappende Mantelwinkelbereich des Kabel-Schutzrohres zwischen 1° und 180° insbesondere zwischen 10° und 90° ganz besonders zwischen 30° und 45°.

Für die weitere Ausführungsform, bei welcher der Trennschlitz des Kabel-Schutzrohrs Stoß-an-Stoß geschlossen wird, liegt der Durchmesser des Kabel-Schutzrohres nach dem Schritt 1f) natürlich bei ca. 100% des Durchmessers des Kabel-Schutzrohres vor/im Schritt 1a), oder etwas darüber oder etwas darunter.

Für die weitere Ausführungsform, bei welcher der Trennschlitz des Kabel-Schutzrohrs über ein dort eingefügtes Verbindungsband geschlossen wird, liegt der Durchmesser des Kabel-Schutzrohres nach dem Schritt 1f) natürlich bei über 100% des Durchmessers des Kabel-Schutzrohres vor/im Schritt 1a), z.B. zwischen 101% und 110%, je nach Querschnitt des Verbindungsbandes.

Insbesondere ist das Kabel-Schutzrohr aus hochdichtem Polyethylen (HDPE) insbesondere mit Dichte größer gleich 0,94 g/cm³ und kleiner gleich 0,97 g/cm³ gebildet, was gut verarbeitbar, stabil, flexibel und dennoch kostengünstig ist. Andere Kunststoffmaterialien sind aber ebenso möglich.

Besonders vorteilhaft ist, wenn das erfindungsgemäße Verfahren und/oder die erfindungsgemäße Vorrichtung und/oder das fertig konfektionierte Seekabel sich auf einem Kabelverleger-Schiff befinden, so dass damit z.B. die Leiter und das Kabel-Schutzrohr einzeln vorgehalten werden können und das fertig konfektionierte Seekabel ohne Zwischenlagerung, ggfs. unter einer Zugentlastungsreserve, auf dem Kabelverleger-Schiff, in die See bzw. auf dem bzw. im Meeresboden verlegt werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich.

Es zeigen:
Figur 1 eine schematische perspektivische Gesamtdarstellung der erfindungsgemäßen Vorrichtung zur Herstellung des erfindungsgemäßen Seekabels;
Figur 2 eine schematische perspektivische vergrößerte Detaildarstellung der erfindungsgemäßen Vorrichtung zur Herstellung des erfindungsgemäßen Seekabels, im Bereich der Öffnungs- und Offenhalteeinrichtungen des Kabel-Schutzrohres des erfindungsgemäßen Seekabels;
Figur 3 eine schematische perspektivische Teilansicht des fertig konfektionierten erfindungsgemäßen Seekabels in einer ersten Ausführungsform;
Figur 4 eine schematische perspektivische Teilansicht des fertig konfektionierten erfindungsgemäßen Seekabels in einer zweiten Ausführungsform mit H-förmigem Verschlussband;
Figur 5 eine schematische perspektivische Teilansicht eines H-förmigen Verschlussbandes gemäß Figur 4.

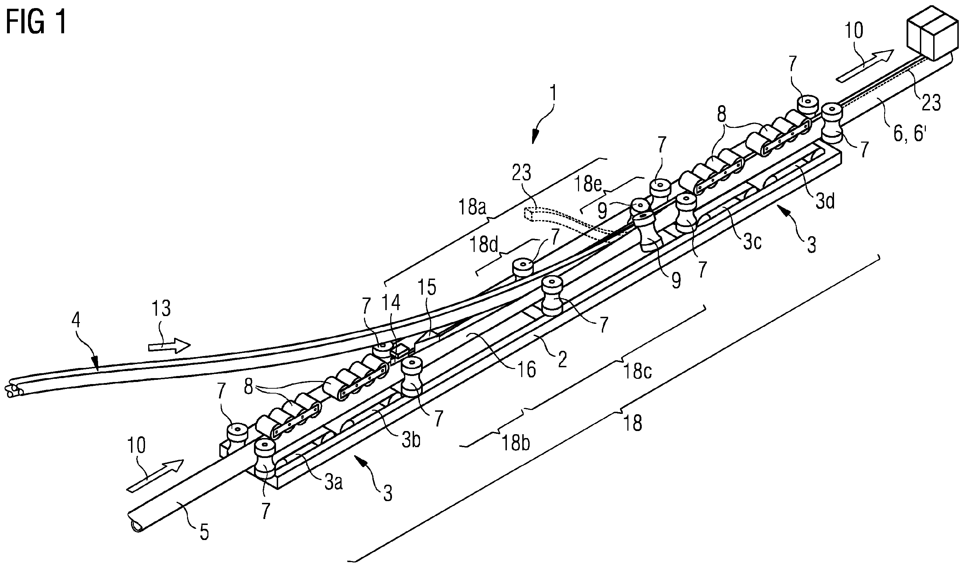

Figur 1 zeigt die erfindungsgemäße Vorrichtung 1 zur Herstellung des erfindungsgemäßen fertig konfektionierten Seekabels 2, welche sich z.B. auf einem nicht dargestellten Kabelverlege-Schiff befindet.

Die erfindungsgemäße Vorrichtung 1 beinhaltet einen leiterförmigen Grundrahmen 2, welcher einen Montagebereich 18 definiert. Auf diesem Grundrahmen 2 befinden sich zwei endseitig angeordnete aktive Antriebe 3 in Form von je zwei Förderbändern 3a und 3b bzw. 3c und 3d, welche für die Förderung der in die Vorrichtung 1 eingehenden Leiter 4 und des Kabel-Schutzrohres 5 sowie das aus der Vorrichtung 1 ausgehende fertig konfektionierte Seekabel 6, 6' sorgen. Hierbei liegt das Kabel-Schutzrohr 5 auf den Förderbändern 3a, 3b, 3c, 3d auf, welche den eigentlichen Transport des Kabel-Schutzrohres 5 zusammen mit den darin befindlichen Leitern 4 in Förderrichtung 10 bewirken. Weiterhin sind auf dem Grundrahmen 2 paarweise links und rechts des Kabel-Schutzrohres 5 angeordnete seitliche 7 Führungsrollen vorhanden, sowie auf das Kabel-Schutzrohr 5 ggfs. federbelastet drückende obere Führungsrollen 8 vorhanden, welche für die seitliche Führung des Kabel-Schutzrohres 5 bzw. die reibschlüssige Auflage des Kabel-Schutzrohres 5 auf den Förderbändern 3a, 3b, 3c, 3d im Montagebereich 18 sorgen.

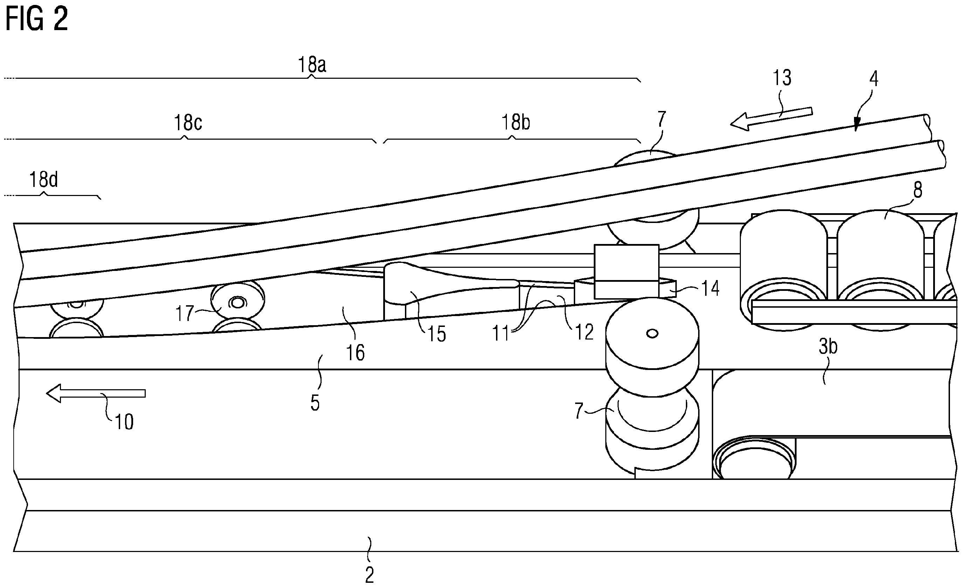

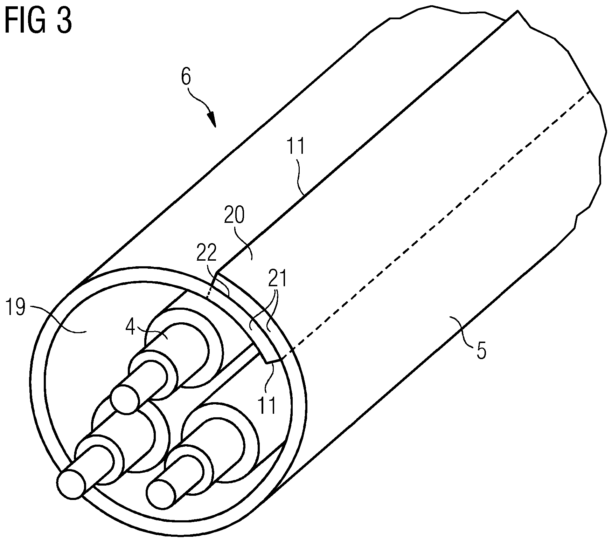

Schließlich sind die Drehachsen zweier schräger Führungsrollen 9, die paarweise links und rechts des Kabel-Schutzrohres 5 einander zugeordnet sind, hier im Beispiel nicht senkrecht, sondern schräg im Winkel von ca. 30°-45° zur Vertikalen in Richtung Kabel-Schutzrohr 5 ausgerichtet. Diese zwei seitlichen schrägen Führungsrollen 9 sind im Schließbereich 18e in Förderrichtung 10 stromabwärts örtlich hinter dem Einführen der Leiter 4 in das Kabel-Schutzrohr 5 angeordnet, so dass damit ein Zusammendrücken der zuvor geöffneten Längskanten 11 (siehe Figur 3) des Trennschlitzes 12 (siehe Figur 2) des Kabel-Schutzrohres 5 erfolgen kann.

Die hier drei Stück elektrische Leiter 4 und ein (in dieser Figur verdeckter und daher nicht sichtbarer) optischer Leiter 4 sowie das zugehörige Kabel-Schutzrohr 5 werden von nicht dargestellten Speichern (z.B. Aufwickelhaspel) der Vorrichtung 1 in den Zusammenführbereich 18a in Förderrichtung 10 mittels unterer aktiver Antriebe 3 mit vorderen und hinteren Förderbändern 3a, 3b, 3c, 3d und passiv mitlaufenden seitlichen, oberen und seitlich schrägen Führungsrollen 7, 8, 9 hinein gefördert, in welcher die Leiter 4 in das geöffnete Kabel-Schutzrohr 5 eingelegt werden, um anschließend als geschlossenes, fertig konfektioniertes Seekabel 6, 6' aus der Vorrichtung 1 heraus auf einen nicht dargestellten Speicher (z.B. Aufwickelhaspel) heraus gefördert zu werden oder aber direkt ohne Zwischenspeicher auf/in dem Meeresboden verlegt zu werden.

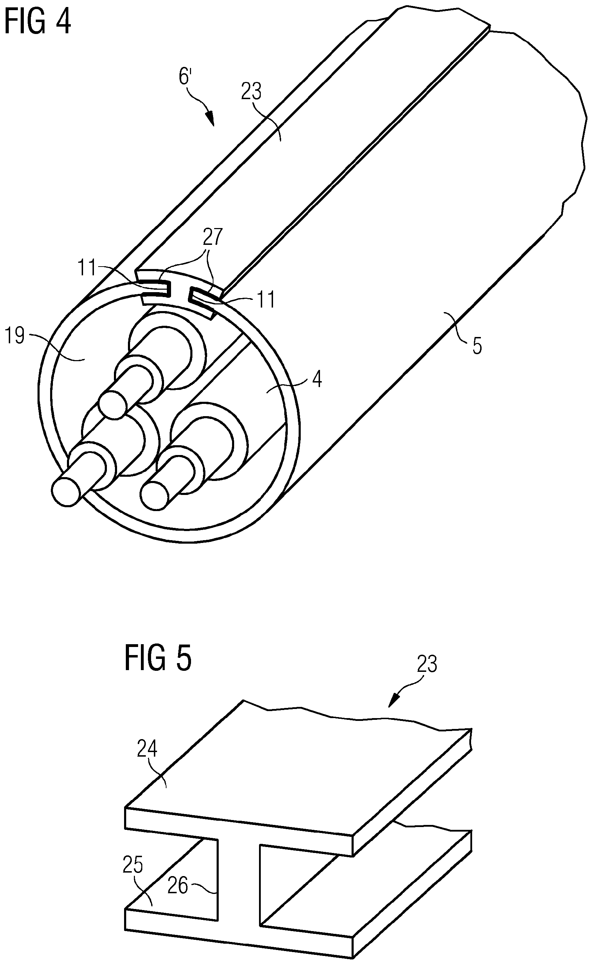

In Figur 1 ist zusätzlich das alternative, fertig konfektionierte erfindungsgemäße Seekabel 6' in einer zweiten Ausführungsform gemäß Figur 4 schematisch dargestellt. Es ist zu erkennen, dass ein mit gestrichelten Linien eingezeichnetes Verschlussband 23 zu Beginn des Schließbereiches 18e des Kabel-Schutzrohrs 5 im Trennschlitz 12 (siehe Fig. 2) zwischen den beiden Längskanten 11 (siehe Fig. 2) des Kabel-Schutzrohrs 5 eingebracht ist. Weitere Details zu diesem Verschlussband 23 wurden bereits in der allgemeinen Beschreibung erwähnt und werden noch weiter unten zu den Figuren 4 und 5 näher beschrieben.

Figur 2 zeigt eine vergrößerte Detaildarstellung der erfindungsgemäßen Vorrichtung 1 im Öffnungsbereich 18b und Offenhaltebereich 18c des Kabel-Schutzrohres 5 des erfindungsgemäßen Seekabels 6, 6'. Die Leiter 4 werden in Förderrichtung 13 von oben her in den Einführbereich 18d in die Einführöffnung 16 des Kabel-Schutzrohres 5 eingeführt.

Zum Öffnen des Kabel-Schutzrohres 5 ist ein Messer 14 in Förderrichtung 10 stromabwärts des Förderbandes 3b im oberen Bereich des Mantels des Kabel-Schutzrohres 5 angeordnet, wobei das Messer 14 das Kabel-Schutzrohr 5 aufschneidet und damit der Trennschlitz 12 mit zwei sich gegenüberliegenden Längskanten 11 am Kabel-Schutzrohr 5 gebildet werden.

Zum Offenhalten des Kabel-Schutzrohres 5 ist ein Keil 15 in Förderrichtung 10 stromabwärts des Messers 14 angeordnet, wobei der Keil 15 den Trennschlitz 12 durch Anlage an den sich gegenüberliegenden Längskanten 11 des Kabel-Schutzrohres 5 offen hält.

Der Trennschlitz 12 wird durch den Keil 15 solange offen gehalten, bis die Leiter 4 in Förderrichtung 13 über die Einführöffnung 16 in den Innenraum des Kabel-Schutzrohres 5 im vollständig eingeführt sind.

Die vier inneren Führungsrollen 17 im Innenraum 16 des Kabel-Schutzrohres 5 dienen dem Niederhalten und ggfs. Offenhalten des geöffneten Kabel-Schutzrohres 5 sowie ggfs. der Abstandshaltung der Leiter 4 zum Boden des Kabel-Schutzrohres 5, im Bereich des Öffnen und Offenhalten des Kabel-Schutzrohres 5.

Figur 3 zeigt nun das fertig konfektionierte erfindungsgemäße Seekabel 6 in einer ersten Ausführungsform mit geschlitztem Kabel-Schutzrohr 5, in welchem die elektrischen und/oder optischen Leiter 4 innerhalb einer optionalen Einbettschicht 19 aufgenommen sind.

Es ist gut erkennbar, dass die beiden Längskanten 11 des Kabel-Schutzrohrs 5 in Umfangsrichtung übereinander geschoben sind und damit ein sich in Umfangsrichtung und Längsrichtung (entspricht der Förderrichtung 10 in Figuren 1 und 2) ersteckender Überlappungsbereich 20 zwischen den beiden Mantelwinkelstreifen 21 des Kabel-Schutzrohrs 5 definiert wird.

Der Durchmesser des Kabel-Schutzrohrs 5 vor dem Auftrennen ist daher größer als der Durchmesser des Kabel-Schutzrohrs 5 nach dem Schließen.

Zwischen den beiden Mantelwinkelstreifen 21 ist dann ein Überlappungsraum 22 gebildet, in welchem dann die Einbettschicht oder eine andere Verbindungs- und Abdichtmasse eingebracht werden kann. Natürlich können die beiden Mantelwinkelstreifen 21 alternativ oder zusätzlich auch von außen miteinander verschweißt werden.

Figur 4 zeigt das fertig konfektionierte erfindungsgemäße Seekabel 6' in einer zweiten Ausführungsform mit einem flexiblen H-förmigen Verschlussband 23, welches im Trennschlitz 12 zwischen den beiden Längskanten 11 des Kabel-Schutzrohrs 5 insbesondere über die gesamte Länge des Kabel-Schutzrohrs 5 insbesondere klemmend eingebracht und über eine Klebeschicht 27 dort eingeklebt ist.

Figur 5 zeigt das H-förmige Verschlussband 23 nach Figur 4, wobei die beiden parallelen Schenkel 24, 25 länger gewählt sind, als der diese verbindenden Zwischensteg 26. Die Dimensionen der beiden parallelen Schenkel 24, 25 und des Zwischensteges 26 hängen von dem Durchmesser und der Wandstärke des Kabel-Schutzrohrs 5, von der Dicke und Fläche der Klebeschicht 27, (Fig. 4) sowie der Klebekraft des Klebstoffes der Klebeschicht 27 (Fig. 4) ab.

In Figur 4 ist zu erkennen, dass das Verschlussband 23 derart in den Trennschlitz 12 des Kabel-Schutzrohrs 5 eingebracht ist, dass die beiden parallelen Schenkel 24 des Verschlussbandes 23 in Umfangsrichtung des Kabel-Schutzrohrs 5 verlaufen und auf dem Mantel des Kabel-Schutzrohrs 5 aufgebracht sind und dass der Zwischensteg 26 des Verschlussbandes 23 in radialer Richtung des Kabel-Schutzrohrs 5 verläuft und zwischen den Oberflächen der beiden Längskanten 11 des Kabel-Schutzrohrs 5 ggfs. unter leichter umfänglicher Klemmkraft aufgebracht ist.

Es wird abschließend noch einmal darauf hingewiesen, dass es sich bei den vorhergehend detailliert beschriebenen Verfahren sowie bei der dargestellten Vorrichtung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen die Begriff "Einheit" und "Modul" nicht aus, dass die betreffenden Komponenten aus mehreren zusammenwirkenden Teil-Komponenten bestehen, die gegebenenfalls auch räumlich verteilt sein können.

## Patentansprüche

1. Verfahren zur Herstellung eines Seekabels (6), beinhaltend eine Anzahl Leiter (4), umfassend Energieleiter (4) und/oder Datenleiter (4), welche innerhalb eines Kabel-Schutzrohres aus Kunststoff (5) aufgenommen sind, wobei folgende Schritte durchgeführt werden:
a) Bereitstellen der Leiter (4) sowie des Kabel-Schutzrohrs (5) und Fördern in einen gemeinsamen Montagebereich (18),
b) Zusammenführen der Leiter (4) und des Kabel-Schutzrohres (5),
c) Öffnen eines Trennschlitzes (12) des Kabel-Schutzrohres (5), so dass sich eine Einführöffnung (16) des geöffneten Trennschlitzes (12) bildet,
d) Offenhalten des geöffneten Trennschlitzes (12),
e) Einführen der Leiter (4) in das Kabel-Schutzrohr (5) durch die Einführöffnung (16) des geöffneten Trennschlitzes (12),
f) Lösen des Offenhaltens des geöffneten Trennschlitzes (12)
- wobei während oder nach Schritt 1f) ein Schließen des geöffneten Trennschlitzes (12) erfolgt,
- wobei das Schließen des geöffneten Trennschlitzes (12) durch Überlappen in einem Überlappungsbereich (20) von Mantelwinkelstreifen (21) des Kabel-Schutzrohres (5) auf beiden Seiten des Trennschlitzes (12) erfolgt, oder durch Aneinanderstoßen zweier Längskanten (11) des Trennschlitzes (12), oder durch insbesondere klemmendes Aufnehmen eines flexiblen Verschlussbandes (23) zwischen zwei Längskanten (11) des Trennschlitzes (12), und
- wobei zeitlich vor oder während Schritt 1e) oder zeitlich während oder nach Schritt 1f) oder zeitlich zwischen Schritt 1e) und Schritt 1f) eine abdichtende wasserdichte Einbettschicht oder Vergussmasse (19) in den Zwischenraum zwischen das Kabel-Schutzrohr (5) und die darin befindlichen Leiter (4) eingefüllt wird.

2. Verfahren nach Anspruch 1, wobei zwischen den Schritten 1b) und 1c) ein Auftrennen des Mantels des Kabel-Schutzrohres (5) erfolgt, so dass sich ein Trennschlitz (12) im Kabel-Schutzrohr (5) in Längsrichtung bildet.

3. Verfahren nach Anspruch 2, wobei das Auftrennen des Mantels des Kabel-Schutzrohres (5) durch mechanisches und/oder physikalisches und/oder chemisches Trennen, insbesondere durch spanloses Trennen mittels Messer bzw. Klinge (14) erfolgt.

4. Vorrichtung zur Herstellung eines Seekabels gemäß dem Verfahren nach einem der Ansprüche 1 bis 3, wobei die Vorrichtung beinhaltet:
a) eine Bereitstelleinrichtung und eine Fördereinrichtung zum Bereitstellen einer Anzahl Leiter (4), umfassend Energieleiter (4) und/oder Datenleiter (4), sowie einer Kabel-Schutzhülle (5) aus Kunststoff und Fördern in einen gemeinsamen Montagebereich (18),
b) eine Zusammenführeinrichtung zum Zusammenführen der Leiter (4) und Kabel-Schutzrohres (5),
c) eine Öffnungseinrichtung zum Öffnen eines in Längsrichtung sich erstreckenden Trennschlitzes (12) des Mantels des Kabel-Schutzrohres (5) mindestens soweit, bis sich eine Einführöffnung (16) für mindestens einen der Leiter (4) bildet,
d) eine Offenhalteeinrichtung zum Offenhalten des geöffneten Trennschlitzes (12),
e) eine Einführeinrichtung zum Einführen der Leiter (4) in das Kabel-Schutzrohr (5) durch die Einführöffnung (16) des geöffneten Trennschlitzes (12) und optional zum nachfolgenden Einführen eines flexiblen Verschlussbandes (23) zumindest in den Trennschlitz (12) und zum Einfüllen einer abdichtenden wasserdichten Einbettschicht oder Vergussmasse (19) in den Zwischenraum zwischen das Kabel-Schutzrohr (5) und die darin befindlichen Leiter (4),
f) eine Löseeinrichtung zum Lösen des Offenhaltens des geöffneten Trennschlitzes (12), und
g) eine Schließeinrichtung zum Schließen des geöffneten Trennschlitzes (12), welche während oder nach der Löseeinrichtung wirkt.

5. Vorrichtung nach Anspruch 4, wobei die Vorrichtung weiterhin eine Auftrenneinrichtung zum Auftrennen des Mantels des Kabel-Schutzrohres (5) in Längsrichtung zur Bildung eines Trennschlitzes (12) beinhaltet, welche nach oder während der Zusammenführeinrichtung und während oder vor der Öffnungseinrichtung wirksam ist.

6. Vorrichtung nach Anspruch 4 oder 5, wobei die Schließeinrichtung eine Anzahl insbesondere ortsfester aktiv oder passiv antreibbare insbesondere schräge Führungsrollen (9) beinhaltet.

7. Seekabel (6, 6'), beinhaltend eine Anzahl Leiter (4), umfassend Energieleiter (4) oder Datenleiter (4), welche innerhalb eines Kabel-Schutzrohres (5) aus Kunststoff aufgenommen und dort geschützt eingebettet sind, wobei sich zwei in einem Überlappungsbereich (20) befindliche in Längsrichtung verlaufende Mantelwinkelstreifen (21) des Kabel-Schutzrohres (5) überlappen, oder zwei Längskanten (11) eines Trennschlitzes (12) des Kabel-Schutzrohres (5) aneinanderstoßen, oder zwei Längskanten (11) eines Trennschlitzes (12) des Kabel-Schutzrohres (5) zwischen sich ein insbesondere flexibles Verschlussband (23) insbesondere klemmend aufnehmen, wobei die zwei sich überlappenden in Längsrichtung verlaufenden Mantelwinkelstreifen (21) des Kabel-Schutzrohres (5) aufeinander aufliegen, oder die aneinanderstoßenden Längskanten (11) des Trennschlitzes (12) des Kabel-Schutzrohres (5) abdichtend wasserdicht miteinander verbunden sind, oder die Längskanten (11) eines Trennschlitzes (12) des Kabel-Schutzrohres (5) mit dem dazwischen liegenden Verschlussband (23) insbesondere über eine Klebeschicht (27) abdichtend wasserdicht miteinander verbunden sind, und eine abdichtende wasserdichte Einbettschicht oder Vergussmasse (19) in dem Zwischenraum zwischen dem Kabel-Schutzrohr (5) und den darin befindlichen Leitern (4).

8. Seekabel nach Anspruch 7, wobei der Durchmesser des Kabel-Schutzrohres (5) zwischen 50% und 99% insbesondere zwischen 60% und 90% ganz besonders zwischen 70% und 80% des ursprünglichen Durchmessers des Kabel-Schutzrohres (5) beträgt und/oder der Überlappungsbereich (20) bzw. die überlappenden Mantelwinkelstreifen (21) zwischen 1° und 180° insbesondere zwischen 10° und 90° ganz besonders zwischen 30° und 45° beträgt.

9. Verfahren nach einem der Ansprüche 1 bis 3, angewendet auf einem Schiff, insbesondere einem Kabelverleger-Schiff.

10. Verfahren nach Anspruch 9, wobei das fertig konfektionierte Seekabel (6, 6') nach dem Schritt 1f) ohne Zwischenlagerung, ggfs. unter einer Zugentlastungsreserve, auf dem Schiff, insbesondere Kabelverleger-Schiff, in die See bzw. auf dem bzw. im Meeresboden verlegt wird.

## Claims

1. Method for manufacturing a submarine cable (6) containing a number of conductors (4) comprising power conductors (4) and/or data conductors (4) which are received within a cable protection tube (5) of plastics material, the following steps being carried out:
a) providing the conductors (4) and the cable protection tube (5), and conveying into a common assembly region (18);
b) gathering the conductors (4) and the cable protection tube (5) ;
c) opening a separation slot (12) of the cable protection tube (5) such that an introduction opening (16) of the opened separation slot (12) is formed;
d) retaining the opened separation slot (12);
e) introducing the conductors (4) into the cable protection tube (5) through the introduction opening (16) of the opened separation slot (12);
f) releasing the retention of the opened separation slot (12) ;
- wherein closing of the opened separation slot (12) takes place during or after step 1f);
- wherein closing of the opened separation slot (12) is performed by overlapping in an overlapping region (20) of angular jacket strips (21) of the cable protection tube (5) on both sides of the separation slot (12), or by abutting two longitudinal edges (11) of the separation slot (12), or by receiving in particular in a clamping manner a flexible closure tape (23) between two longitudinal edges (11) of the separation slot (12); and
- wherein, in temporal terms before or during step 1e) or in temporal terms during or after step 1f) or in temporal terms between step 1e) and step 1f), a sealing watertight embedding layer or casting compound (19) is filled into the intermediate space between the cable protection tube (5) and the conductors (4) located therein.

2. Method according to Claim 1, wherein slitting of the jacket of the cable protection tube (5) is performed between steps 1b) and 1c), such that a separation slot (12) in the longitudinal direction in the cable protection tube (5) is formed.

3. Method according to Claim 2, wherein slitting of the jacket of the cable protection tube (5) is performed by mechanical and/or physical and/or chemical separation, in particular by non-subtractive separation by means of a knife or a blade (14), respectively.

4. Apparatus for manufacturing a submarine cable according to the method according to one of Claims 1 to 3, wherein the apparatus contains the following:
a) a provisioning installation and a conveying installation for providing a number of conductors (4) comprising power conductors (4) and/or data conductors (4), and a cable protection sheath (5) of plastics material, and conveying into a common assembly region (18);
b) a gathering installation for gathering the conductors (4) and the cable protection tube (5);
c) an opening installation for opening a longitudinally extending separation slot (12) of the jacket of the cable protection tube (5) at least up to the point at which an introduction opening (16) for at least one of the conductors (4) is formed;
d) a retention installation for retaining the opened separation slot (12);
e) an introduction installation for introducing the conductors (4) into the cable protection tube (5) through the introduction opening (16) of the opened separation slot (12), and optionally for subsequently introducing a flexible closure tape (23) at least into the separation slot (12), and for filling a sealing watertight embedding layer or casting compound (19) into the intermediate space between the cable protection tube (5) and the conductors (4) located therein;
f) a releasing installation for releasing the retention of the opened separation slot (12); and
g) a closing installation for closing the opened separation slot (12), said closing installation being effective with or after the releasing installation.

5. Apparatus according to Claim 4, wherein the apparatus furthermore has a slitting installation for longitudinally slitting the jacket of the cable protection tube (5) for forming a separation slot (12), said slitting installation being effective after or with the gathering installation, and with or prior to the opening installation.

6. Apparatus according to Claim 4 or 5, wherein the closing installation contains a number of in particular locationally fixed, actively or passively drivable, in particular oblique guide rollers (9).

7. Submarine cable (6, 6') containing a number of conductors (4) comprising power conductors (4) or data conductors (4) which are received within a cable protection tube (5) of plastics material and are protectively embedded therein, wherein two angular jacket strips (21) of the cable protection tube (5) that are located in an overlapping region (20) and run in the longitudinal direction mutually overlap, or two longitudinal edges (11) of a separation slot (12) of the cable protection tube (5) mutually abut, or two longitudinal edges (11) of a separation slot (12) of the cable protection tube (5) therebetween receive in particular in a clamping manner an in particular flexible closure tape (23), wherein the two mutually overlapping angular jacket strips (21) of the cable protection tube (5) that run in the longitudinal direction bear on one another, or the mutually abutting longitudinal edges (11) of the separation slot (12) of the cable protection tube (5) are interconnected in a sealing watertight manner, or the longitudinal edges (11) of a separation slot (12) of the cable protection tube (5), having the closure tape (23) lying therebetween, are interconnected in a sealing watertight manner in particular by way of an adhesive layer (27) and a sealing watertight embedding layer or casting compound (19) in the intermediate space between the cable protection tube (5) and the conductors (4) located therein.

8. Submarine cable according to Claim 7, wherein the diameter of the cable protection tube (5) is between 50% and 99%, in particular between 60% and 90%, most particularly between 70% and 80% of the original diameter of the cable protection tube (5), and/or the overlapping region (20), or the overlapping angular jacket strips (21), respectively, are/is between 1° and 180°, in particular between 10° and 90°, most particularly between 30° and 45°.

9. Method according to one of Claims 1 to 3, used on a ship, in particular a cable-laying ship.

10. Method according to Claim 9, wherein the completely made-up submarine cable (6, 6') after step 1f) without intermediate storage on the ship, in particular the cable-laying ship, optionally using a tension-relief reserve, is laid in the sea, or on or in the seabed, respectively.

## Revendications

1. Procédé de production d'un câble sous-marin (6) renfermant un certain nombre de conducteurs (4), comprenant des conducteurs d'énergie (4) et / ou des conducteurs de données (4), lesquels sont logés à l'intérieur d'un tube protecteur de câble en matière synthétique (5), dans lequel les étapes suivantes sont exécutées :
a) mise à disposition des conducteurs (4) ainsi que du tube protecteur de câble (5) et acheminement dans une zone de montage commune (18),
b) assemblage des conducteurs (4) et du tube protecteur de câble (5),
c) ouverture d'une fente de séparation (12) du tube protecteur de câble (5) de sorte qu'une ouverture d'introduction (16) de la fente de séparation (12) ouverte se forme,
(d) maintien en position ouverte de la fente de séparation (12) ouverte,
(e) introduction des conducteurs (4) dans le tube protecteur de câble (5) par l'ouverture d'introduction (16) de la fente de séparation (12) ouverte,
(f) relâchement du maintien en position ouverte de la fente de séparation (12) ouverte
- dans lequel pendant ou après l'étape 1f) se produit une fermeture de la fente de séparation (12) ouverte,
- dans lequel la fermeture de la fente de séparation (12) ouverte se fait par chevauchement dans une zone de chevauchement (20) des bandes d'angle de gaine (21) du tube protecteur de câble (5) sur les deux côtés de la fente de séparation (12), ou par aboutement des deux arêtes longitudinales (11) de la fente de séparation (12), ou par logement, plus particulièrement par serrage, d'une bande de fermeture souple (23) entre deux arêtes longitudinales (11) de la fente de séparation (12), et
- dans lequel temporellement avant ou pendant l'étape 1e) ou temporellement pendant ou après l'étape 1f) ou temporellement entre l'étape 1e) et l'étape 1f), une couche d'enrobage ou une masse de scellement (19) étanche à l'eau d'une manière étanche est versée dans l'espace intermédiaire situé entre le tube protecteur de câble (5) et les conducteurs (4) se trouvant à l'intérieur.

2. Procédé selon la revendication 1, dans lequel entre les étapes 1b) et 1c) a lieu une séparation de la gaine du tube protecteur de câble (5) de sorte qu'une fente de séparation (12) se forme dans le tube protecteur de câble (5) dans le sens longitudinal.

3. Procédé selon la revendication 2, dans lequel la séparation de la gaine du tube protecteur de câble (5) se produit par séparation mécanique et/ou physique et/ou chimique, plus particulièrement par séparation sans déformation à l'aide d'un couteau ou d'une lame (14).

4. Dispositif de production d'un câble sous-marin selon le procédé selon l'une des revendications 1 à 3, dans lequel le dispositif renferme :
a) un dispositif de mise à disposition et un dispositif d'acheminement pour la mise à disposition d'un certain nombre de conducteurs (4), comprenant des conducteurs d'énergie (4) et/ou des conducteurs de données (4), ainsi qu'un revêtement extérieur de câble (5) en matière synthétique et pour l'acheminement dans une zone de montage commune (18),
b) un dispositif d'assemblage pour l'assemblage des conducteurs (4) et du tube protecteur de câble (5),
c) un dispositif d'ouverture pour ouvrir une fente de séparation (12) s'étendant dans le sens longitudinal de la gaine du tube protecteur de câble (5) au moins jusqu'à ce qu'une ouverture d'introduction (16) pour au moins l'un des conducteurs (4) se forme,
d) un dispositif de maintien en position ouverte pour maintenir en position ouverte la fente de séparation (12) ouverte,
e) un dispositif d'introduction pour introduire les conducteurs (4) dans le tube protecteur de câble (5) par l'ouverture d'introduction (16) de la fente de séparation (12) ouverte et, facultativement, pour l'introduction consécutive d'une bande de fermeture souple (23) au moins dans la fente de séparation (12) et pour le versement d'une couche d'enrobage ou d'une masse de scellement (19) étanche à l'eau d'une manière étanche dans l'espace intermédiaire situé entre le tube protecteur de câble (5) et les conducteurs (4) se trouvant à l'intérieur,
f) un dispositif de relâchement pour relâcher le maintien en position ouverte de la fente de séparation (12) ouverte, et
g) un dispositif de fermeture pour fermer la fente de séparation (12) ouverte, lequel agit pendant ou après le dispositif de relâchement.

5. Dispositif selon la revendication 4, dans lequel le dispositif renferme, en outre, un dispositif de séparation pour séparer la gaine du tube protecteur de câble (5) dans le sens longitudinal pour former une fente de séparation (12), lequel est efficace après ou pendant le dispositif d'assemblage ou pendant ou avant le dispositif d'ouverture.

6. Dispositif selon la revendication 4 ou 5, dans lequel le dispositif de fermeture renferme un certain nombre de galets de guidage (9) plus particulièrement stationnaires, pouvant être actionnés de façon active ou passive, plus particulièrement obliques.

7. Câble sous-marin (6, 6'), renfermant un certain nombre de conducteurs (4), comprenant des conducteurs d'énergie (4) ou des conducteurs de données (4), lesquels sont logés à l'intérieur d'un tube protecteur de câble (5) en matière synthétique et y sont insérés en étant protégés, dans lequel deux bandes d'angle de gaine (21) du tube protecteur de câble (5) se trouvant dans une zone de chevauchement (20) et passant dans le sens longitudinal, se chevauchent, ou deux arêtes longitudinales (11) d'une fente de séparation (12) du tube protecteur de câble (5) sont jointives, ou deux arêtes longitudinales (11) d'une fente de séparation (12) du tube protecteur de câble (5) logent entre elles, plus particulièrement par serrage, une bande de fermeture (23) plus particulièrement souple, dans lequel les deux bandes d'angle de gaine (21), passant dans le sens longitudinal en se chevauchant, du tube protecteur de câble (5) reposent l'une sur l'autre, ou les arêtes longitudinales (11) jointives de la fente de séparation (12) du tube protecteur de câble (5) sont reliées ensemble en étant étanches à l'eau d'une manière étanche, ou les arêtes longitudinales (11) d'une fente de séparation (12) du tube protecteur de câble (5) sont reliées ensemble en étant étanches à l'eau d'une manière étanche avec la bande de fermeture (23) se trouvant entre, plus particulièrement par une couche adhésive (27), et une couche d'enrobage ou masse de scellement (19) étanche à l'eau d'une manière étanche dans l'espace intermédiaire situé entre le tube protecteur de câble (5) et les conducteurs (4) s'y trouvant.

8. Câble sous-marin selon la revendication 7, dans lequel le diamètre du tube protecteur de câble (5) est compris entre 50 % et 99 %, plus particulièrement entre 60 % et 90 %, plus particulièrement encore entre 70 % et 80 % du diamètre initial du tube protecteur de câble (5) et/ou la zone de chevauchement (20) ou les bandes d'angle de gaine (21) se chevauchant sont comprises entre 1° et 180°, plus particulièrement entre 10° et 90°, plus particulièrement encore, entre 30° et 45°.

9. Procédé selon l'une des revendications 1 à 3, appliqué sur un navire, plus particulièrement un navire poseur de câbles.

10. Procédé selon la revendication 9, dans lequel le câble sous-marin (6, 6') prêt à l'emploi est posé, après l'étape 1f) sans stockage intermédiaire, le cas échéant, avec une réserve de décharge de traction, sur le navire, plus particulièrement le navire poseur de câbles, dans la mer ou sur ou dans le fond marin.
